# EUROPEAN PATENT APPLICATION

(11) **EP 4 241 587 A2**
(43) Date of publication of application: **13.09.2023**
(21) Application number: 23177078.5
(22) Date of filing: 26.07.2019
(51) Int. Cl.: A24F 40/10

(54) **AEROSOL-GENERATING DEVICE HAVING IMPROVED POWER SUPPLY CONTROLLER**

(30) Priority: 26.07.2018 EP 18185888
(62) Divisional of application: 19742618.2
(71) Applicant: Philip Morris Products S.A., 2000 Neuchâtel (CH)
(72) Inventor: SILVESTRINI, Patrick Charles, 2000 Neuchatel (CH); ZINOVIK, Ihar Nikolaevich, 2000 Neuchatel (CH)
(74) Representative: Nevett, Duncan

(57) **Abstract**

An aerosol-generating device (10) comprising: an air inlet (28a); an air outlet (28b); an air flow passage extending between the air inlet and the air outlet; a heating element (30) for heating an aerosol-forming substrate (26); a sensor assembly (50) in communication with the air flow passage; and a controller (60) coupled to the sensor assembly and configured control a supply of power to the heating element. The sensor assembly (60) is configured to measure one or both of a flow rate and a pressure level within the air flow passage. The amount of power supplied to the heating element (30) is dependent on at least one of: the flow rate and the pressure level measured by the sensor assembly (60); the length of time between the start of a given puff and the end of the puff immediately preceding said given puff; and the puff number of a given puff.

## Description

The present invention relates to aerosol-generating devices. In particular, the invention relates to aerosol-generating devices having a heating element for heating an aerosol-forming substrate. The present invention also relates to an aerosol-generating systems including such aerosol-generating devices in combination with an aerosol-generating article or cartridge for use with the aerosol-generating device.

In a number of handheld aerosol-generating devices, an electrically operated heating element may be used for heating an aerosol-forming substrate to generate an aerosol. The heating element may be controlled by a controller. In particular, the controller may be configured to instigate the supply of electrical power to the heating element when a user draws or puffs on the aerosol-generating device, so that aerosol can be provided for that puff. To achieve this, the aerosol-generating device may comprise a sensor for sensing airflow within the aerosol-generating device. The sensed airflow can be indicative of suction caused by the user taking a puff, and can therefore be used to instigate the supply of electrical power to the heating element, and consequently, the delivery of aerosol for that puff. Such devices may be known as puff driven devices.

In such puff driven devices, a predetermined amount of power is supplied to heating element each time a user puffs on the aerosol-generating device. However, such arrangements may lead to undesirable effects. For example, if the intensity of a given puff is low, then not all vapour may be evacuated from the airflow channel in the device. This may cause a build-up of liquid on the walls of the device, which could affect the performance of the device for subsequent puffs. Such liquid could also eventually transfer to the mouth of a user. Another drawback may occur if the intensity of a given puff is high, since the power delivered to the heating element may not be large enough to result in the delivery of a sufficient amount of aerosol from said puff.

It would therefore be desirable to provide an aerosol-generating device which does not suffer from such drawbacks.

According to a first aspect of the present invention there is provided an aerosol-generating device comprising: an air inlet; an air outlet; an air flow passage extending between the air inlet and the air outlet; and a heating element for heating an aerosol-forming substrate. The device further comprises a sensor assembly in communication with the air flow passage, the sensor assembly being configured to measure one or both of a flow rate and a pressure level within the air flow passage; and a controller coupled to the sensor assembly and configured control a supply of power to the heating element, wherein the amount of power supplied to the heating element is dependent on one or both of the flow rate and the pressure level measured by the sensor assembly.

The present inventors have appreciated that by arranging for the amount of power supplied to the heating element to be dependent on one or both of the flow rate and the pressure level measured by the sensor assembly, a user can have an improved experience. In particular, a user can use their puff intensity as a means for controlling the amount of aerosol that they receive. For example, if a user puffs strongly on the device, then the controller may arrange for a greater amount of power to be supplied to the heating element, than if the user puffs lightly on the device. In such an arrangement, more aerosol or a more concentrated aerosol can be delivered for the strong puff, and less aerosol or a less concentrated aerosol can be delivered for the light puff. This can provide the user with a more intuitive way of controlling the properties of the aerosol that they receive.

The present inventors have also appreciated that an alternative, yet also advantageous solution is to adjust or control the amount of power which is supplied to the heating element for a given puff, depending on the length of time between the start of said given puff and the end of the puff immediately preceding said given puff.

Therefore, according to a second aspect of the present invention, there is provided an aerosol-generating device comprising: an air inlet; an air outlet; an air flow passage extending between the air inlet and the air outlet; a heating element for heating an aerosol-forming substrate; a sensor assembly in communication with the air flow passage, the sensor assembly being configured to measure one or both of a flow rate and a pressure level within the air flow passage; and a controller coupled to the sensor assembly and configured to control a supply of power to the heating element, wherein the controller is further configured to receive data from the sensor assembly and determine when a user puffs on the aerosol-generating device and record the time at which each puff starts and the time at which each puff ends, and wherein the amount of power supplied to the heating element for a given puff is dependent on the length of time between the start of said given puff and the end of the puff immediately preceding said given puff.

By arranging for the amount of power supplied to the heating element for a given puff to be dependent on the length of time between the start of said given puff and the end of the puff immediately preceding said given puff, the aerosol delivery can be adjusted to accommodate for a user's recent experience. For example, if only a short amount of time has elapsed since the user's last puff, it may be desirable to supply a relatively low amount of power for the user's next puff. Similarly, if a long time has elapsed since the user's last puff, it may be desirable to supply a relatively high amount of power for the user's next puff.

The present inventors have also appreciated that a yet further alternative, and also advantageous solution is to adjust or control the amount of power which is supplied to the heating element for a given puff, depending on how many puffs the user has already had.

Therefore, according to a third aspect of the present invention, there is provided an aerosol-generating device comprising: an air inlet; an air outlet; an air flow passage extending between the air inlet and the air outlet; a heating element for heating an aerosol-forming substrate; a sensor assembly in communication with the air flow passage, the sensor assembly being configured to measure one or both of a flow rate and a pressure level within the air flow passage; and a controller coupled to the sensor assembly and configured to control a supply of power to the heating element, wherein the controller is further configured to receive data from the sensor assembly and record when a user puffs on the aerosol-generating device and assign a puff number to each puff which is recorded by the controller, and wherein the amount of power supplied to the heating element for a given puff is dependent on the puff number of said given puff.

By arranging for the amount of power supplied to the heating element for a given puff to be dependent on the puff number of said given puff, the aerosol delivery can be adjusted to accommodate for a user's previous experience. For example, in conventional cigarettes, the level of nicotine delivery is higher in a user's last few puffs than it is in the user's initial few puffs. Accordingly, the controller can be arranged such that a higher level of power is supplied to the heating element for higher puff numbers, than that which is supplied to the heating element for lower puff numbers. For example, the controller may be configured to supply a first level of power for a first puff number and a second level of power for a second puff number. The first level of power may be greater than the second level of power, and the first puff number may be greater than the second puff number. The first puff number may be between 4 and 8, or 6 and 8.

This may help the aerosol-generating device to more closely follow the behaviour of conventional cigarettes.

Preferred features of the first, second and third aspects of the present invention are described below.

In some embodiments, the amount of power supplied to the heating element is dependent on one or both of the flow rate and the pressure level measured by the sensor assembly. Therefore, the controller is configured so that the heating element can be supplied with at least two different power levels or amounts of power, depending on what values are measured by the sensor assembly. This means that a user can obtain different sensory experiences depending on how they choose to use the aerosol-generating device.

Accordingly, preferably, the controller is configured to: instigate the supply of a first amount of power to the heating element in response to the sensor assembly measuring one or both of a first level of flow rate and first pressure level within the air flow passage; and instigate the supply of a second amount of power to the heating element in response to the sensor assembly measuring one or both of a second level of flow rate and second pressure level within the air flow passage.

In some embodiments, the first amount of power is greater than the second amount of power. In some embodiments, the first level of flow rate is greater than the second level of flow rate. In some embodiments, the first pressure level is greater than the second pressure level. Therefore, in such embodiments, if a user chooses to increase the intensity of their puff then one or both of a higher flow rate and pressure level is created in the air flow passage. This may be measured by the sensor assembly and the measured data sent to the controller. The controller can then use this measurement data to ensure that an increased power level is supplied to the heating element for that puff.

The controller may be configured such that any number of different power levels can be supplied to the heating element for any given puff. For example, the controller may utilise an algorithm, which calculates the amount of power that should be supplied to the heating element for a given puff, based on a value measured by the sensor assembly at the start of said given puff. The controller may be configured so that a constant level of power is supplied to the heating element during a given puff.

The controller and sensor assembly may be configured so that one or both of the flow rate and the pressure level are repeatedly measured during a given puff, with the amount of power being supplied to the heating element being dependent on the repeated measurements. In such embodiments, a varying level of power may be supplied to the heating element during a given puff. For example, one or both of the flow rate and the pressure level may be measured at set time intervals within the duration of a given puff, and if one or both of the flow rate and the pressure level change between any two adjacent measurement points, then the amount of power being supplied to the heating element is adjusted so that the supplied power level is based on the most recently measured value for one or both of the flow rate and the pressure level. Such an arrangement can advantageously allow for dynamic adjustment of the heating element performance and thus aerosol delivery.

The duration of the time interval may be at least 0.05 milliseconds, preferably at least 10 milliseconds, more preferably at least 100 milliseconds. The duration of the time interval may be 300 milliseconds or less, preferably 100 milliseconds or less, more preferably 10 milliseconds or less.

In some preferred embodiments, the controller is configured to use a look-up table for determining the amount of power to be supplied to the heating element. The look-up table may comprise a set of power values and one or both of a set of flow rate parameters and a set of pressure level parameters, and wherein the look-up table associates each power value with a corresponding flow rate parameter, pressure level parameter, or both. The flow rate parameter may be a single flow rate value or may be a range of flow rate values. The pressure level parameter may be a single pressure level value or may be a range of pressure level values.

By way of example, if the sensor assembly measures a first flow rate during a given puff, the controller can determine which range of flow rate values in the look-up table encompasses said first flow rate, determine which power value corresponds to said determined range of flow rate values, and instigate the supply of said power value to the heating element.

The look-up table or look-up tables described herein may each be stored in a computer readable memory accessible to the controller. The computer readable memory may be provided within the aerosol-generating device. The computer readable memory may be stored externally to the aerosol-generating device, but accessible to the aerosol-generating device, by, for example, a wireless communication link.

In some embodiments, the amount of power supplied to the heating element is dependent on the length of time between the start of a given puff and the end of the puff immediately preceding said given puff.

For example, if the controller determines there to be a first length of time between the start of a given puff and the end of the puff immediately preceding said given puff, then the controller is configured to instigate the supply of a first amount of power to the heating element, whereas if the controller determines there to be a second length of time between the start of a given puff and the end of the puff immediately preceding said given puff, then the controller is configured to instigate the supply of a second amount of power to the heating element. In such an arrangement, the first length of time is different to the second length of time, and the first amount of power is different to the second amount of power. In such an arrangement, preferably, the first length of time is greater than the second length of time, and the first amount of power is greater than the second amount of power. Put another way, the controller may be configured to arrange for the supply of an increased amount of power to the heating element when a longer period of time elapses between puffs.

Where the amount of power supplied to the heating element for a given puff is dependent on the length of time between the start of said given puff and the end of the puff immediately preceding said given puff, the controller may be configured to further adjust the amount of power supplied for said given puff based on historic measurements for one or more puffs preceding said given puff. The historic measurements may include the period of time which has elapsed between two or more of the preceding puffs, such as the period of time which has elapsed between a first preceding puff and a second preceding puff. The historic measurements may include an estimated or calculated amount of nicotine, which has been delivered by the aerosol-generating device during the current use session.

The controller may be configured to determine start and end times for a given puff in a number of ways. As one example, the controller may monitor the data received from the sensor assembly and determine that a puff has started because one or both of the measured flow rate and pressure level has rapidly changed from a steady state value or range of values to a non-steady state value. In the case of flow rate, this may be when the measured flow rate value rapidly changes from no value being measured or a low value being measured to a higher value being measured. Accordingly, in some embodiments, the controller may be configured to determine that a puff has started because one or both of the measured flow rate and pressure level values has risen above a predefined threshold value. The point in time at which the measured value rises above the predefined threshold value may be defined as the start time for the puff.

Therefore, preferably, the controller is configured to determine whether a data value sent to the controller from the sensor assembly exceeds a threshold value, and if the data value exceeds the threshold value, determine that said data value indicates the start of a puff.

Similarly, the controller may be configured to determine that a puff has finished because one or both of the measured flow rate and pressure level values has fallen below a predefined threshold value. The point in time at which the measured value falls below the predefined threshold value may be defined as the end time for the puff. The length of time between the start time of a given puff and the end time of the given puff may be defined as the puff duration for said given puff.

Therefore, preferably, the controller is configured to determine whether a data value sent to the controller from the sensor assembly is below a threshold value, and if the data value is below the threshold value, determine that said data value indicates the end of a puff.

In some preferred embodiments, the controller is configured to use a look-up table for determining the amount of power to be supplied to the heating element, the look-up table comprising a set of power values and a set of time ranges, and wherein the look-up table associates each power value with a corresponding time range. By way of example, if the controller determines there to be a first length of time between the start of a given puff and the end of the puff immediately preceding said given puff, then the controller can determine which time range encompasses said first length of time, determine which power value corresponds to said determined time range, and instigate the supply of said power value to the heating element for said given puff.

In some embodiments, the amount of power supplied to the heating element for a given puff is dependent on the puff number of said given puff. For example, if the controller determines that a given puff has a low puff number then the controller is configured to instigate the supply of a first amount of power to the heating element, whereas if the controller determines that a given puff has a high puff number, then the controller is configured to instigate the supply of a second amount of power to the heating element. In such an arrangement, the first amount of power is different to the second amount of power. In such an arrangement, preferably, the first amount of power is lower than the second amount of power. Put another way, the controller may be configured to arrange for the supply of an increased amount of power to the heating element when it appears as though the user has already had several puffs on the device, so that the device may more closely follow the behaviour of conventional cigarettes.

Alternatively or additionally, the controller may be configured to arrange for the supply of a lower amount of power to the heating element when it appears as though the user has already had several puffs on the device. This may be desirable if there is an incentive to reduce the amount of aerosol, which a user receives in later puffs.

In some preferred embodiments, the controller is configured such that no power is supplied to the heating element when a given puff is occurring, if the puff number assigned to said given puff exceeds a threshold value. This may be advantageous if there is a desire to limit the number of puffs that a user can have on the aerosol-generating device.

In some embodiments, the aerosol-generating device may be provided with a means for resetting the puff numbers. For example, the aerosol-generating device may be provided with a button which allows a user to reset the puff number to zero. Alternatively or additionally, the aerosol-generating device may be configured such that the puff number resets to zero after a predefined amount of time has passed since a certain numbered puff occurred. By way of example, if the aerosol-generating device is configured so that only seven puffs can be taken during a single use session, then the aerosol-generating device may be configured so that the puff number is reset to zero ten minutes after the seventh puff has occurred.

In some preferred embodiments, the controller is configured to use a look-up table for determining the amount of power to be supplied to the heating element for a given puff number, the look-up table comprising a set of power values and a set of puff numbers, and wherein the look-up table associates each power value with a corresponding puff number. More specifically, the look-up table may comprise a set of power values and a set of puff numbers, and wherein each power value of the look-up table is different from the other power values of the look-up table, and wherein the look-up table associates each power value with one puff number in the set of puff numbers. By way of example, if the controller determines that a given puff is the first puff in the current use session, then the controller can determine which power value in the look-up table corresponds to the first puff number, and instigate the supply of said power value to the heating element for said given puff. However, if the controller determines that a given puff is the sixth puff in the current use session, then the controller can determine which power value in the look-up table corresponds to the sixth puff number, and instigate the supply of said power value to the heating element for said given puff.

The aerosol-generating device may comprise a power supply electrically connectable to the heating element. The power supply is preferably configured to provide an alternating electric current to the heating element. The power supply may be disposed within the housing of the device. The power supply may be a DC power supply. The power supply may be a battery. The battery may be a Lithium based battery, for example a Lithium-Cobalt, a Lithium-Iron-Phosphate, a Lithium Titanate or a Lithium-Polymer battery. The battery may be a Nickel-metal hydride battery or a Nickel cadmium battery. The power supply may be another form of charge storage device such as a capacitor. The power supply may require recharging and be configured for many cycles of charge and discharge. The power supply may have sufficient capacity to allow for a predetermined number of puffs or discrete activations of an atomising assembly.

The controller may comprise control circuitry configured to control a supply of power from the power supply to the heating element. The control circuitry may comprise a microcontroller. The microcontroller is preferably a programmable microcontroller. The control circuitry may comprise further electronic components. The control circuitry may be configured to regulate a supply of power to the heating element.

The aerosol-generating system may comprise a first power supply arranged to supply power to the control circuitry and a second power supply configured to supply power to the heating element.

The sensor assembly comprises at least one sensor configured to measure one or both of a flow rate and a pressure level. The at least one sensor may comprise one or more of a temperature sensor, a flow sensor and a pressure level sensor.

The sensor assembly is in fluid communication with the air flow passage and configured to measure one or both of a flow rate and a pressure level within the air flow passage. The sensor assembly may therefore comprise at least one sensor disposed within the air flow passage. Alternatively or additionally, the sensor assembly may comprise at least one sensor spaced from the air flow passage but in fluid communication with the air flow passage.

In some preferred embodiments, the sensor assembly comprises a first pressure level sensor and a second pressure level sensor spaced along the air flow passage. Such an arrangement may allow for a calculation of a flow rate within the air flow passage by analysing the differential between the pressure levels respectively measured by the first and second pressure level sensors.

In accordance with a fourth of the present invention, there is provided an aerosol-generating system comprising an aerosol-generating device according to any one of the first, second and third aspects, and a cartridge comprising a liquid storage portion containing a supply of liquid aerosol-forming substrate.

In accordance with a fifth aspect of the present invention, there is provided an aerosol-generating system comprising an aerosol-generating device according to any one of the first, second and third aspects, and a cartridge comprising: a first compartment containing a nicotine source; a second compartment containing an acid source; a mixing chamber for mixing nicotine from the nicotine source and acid from the acid source with an air flow to form an aerosol; and wherein the heating element is configured to heat the mixing chamber.

In accordance with a sixth aspect of the present invention, there is provided an aerosol-generating system comprising an aerosol-generating device according to any one of the first, second and third aspects, and a cartridge comprising a liquid storage portion containing a supply of liquid aerosol-forming substrate.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

The heating element of the present invention is electrically operated and configured to receive a supply of electrical power. The electrically operated heating element may have a number of different configurations. For example, the heating element may comprise a coil. The coil may extend around a wick which is configured to transport liquid from a storage portion containing a liquid aerosol-generating substrate to a location adjacent to the coil. The coil heating element can be used to vaporise the transported liquid to produce an aerosol.

Preferably, the heating element is a substantially flat electrically conductive and fluid permeable heating element, such as a mesh. For example, the heating element may be an array of filaments, for example arranged parallel to each other.

Preferably the electrically operable heating element comprises a magnetic material. Suitable magnetic materials for the heating element include ferrites, electrical steel, and permalloy.

As used herein with reference to the invention, the term "air inlet" is used to describe one or more apertures through which air may be drawn into a component or portion of a component of the cartridge or aerosol-generating device.

As used herein with reference to the invention, the term "air outlet" is used to describe one or more apertures through which air may be drawn out of a component or portion of a component of the cartridge or aerosol-generating device.

As used herein with reference to the invention, the terms "proximal", "distal", "upstream" and "downstream" are used to describe the relative positions of components, or portions of components, of the cartridge and aerosol-generating system.

As used herein with reference to the invention, the term "longitudinal" is used to describe the direction between the proximal end and the opposed distal end of the cartridge or aerosol-generating system and the term "transverse" is used to describe the direction perpendicular to the longitudinal direction.

As used herein with reference to the invention, the term "length" is used to describe the maximum longitudinal dimension of components, or portions of components, of the cartridge or aerosol-generating system parallel to the longitudinal axis between the proximal end and the opposed distal end of the cartridge or aerosol-generating system.

As used herein with reference to the invention, the terms "height" and "width" are used to describe the maximum transverse dimensions of components, or portions of components, of the cartridge or aerosol-generating system or aerosol-generating device perpendicular to the longitudinal axis of the cartridge or aerosol-generating system. Where the height and width of components, or portions of components, of the cartridge or aerosol-generating system are not the same, the term "width" is used to refer to the larger of the two transverse dimensions perpendicular to the longitudinal axis of the cartridge or aerosol-generating system.

As used herein with reference to the invention, the term "elongate" is used to describe a component or portion of a component having a length greater than the width and height thereof.

As used herein with reference to the invention, the term "nicotine", is used to describe nicotine, nicotine base or a nicotine salt. In embodiments in which the first carrier material is impregnated with nicotine base or a nicotine salt, the amounts of nicotine recited herein are the amount of nicotine base or amount of ionised nicotine, respectively.

As used herein, the term `aerosol former' is used to describe any suitable known compound or mixture of compounds that, in use, facilitates formation of an aerosol.

As used herein, the terms 'upstream' and 'downstream' are used to describe the relative positions of elements, or portions of elements, of the heater assembly, cartridge, or aerosol-generating system in relation to the direction in which air is drawn through the system during use thereof.

As used herein, the term 'longitudinal' is used to describe the direction between the upstream end and the downstream end of the heater assembly, cartridge, or aerosol-generating system and the term 'transverse' is used to describe the direction perpendicular to the longitudinal direction. With reference to the heater assembly, the term 'transverse' refers to the direction parallel to the plane of the porous sheet or sheets, while the term `perpendicular' refers to the direction perpendicular to the plane of the porous sheet or sheets.

The aerosol-generating system may be a handheld aerosol-generating system configured to allow a user to suck on a mouthpiece to draw an aerosol through the mouth end opening. The aerosol-generating system may have a size comparable to a conventional cigar or cigarette. The aerosol-generating system may have a total length between about 30 mm and about 150 mm. The aerosol-generating system may have an external diameter between about 5 mm and about 30mm.

Features of one aspect of the invention may be applied to the other aspects of the invention. In particular, although the invention has been described above in respect of different aspects, it will be appreciated that such aspects are not necessarily mutually exclusive but may also be applied in combination with one another. By way of example, the first and third aspects of the present invention may be adopted in combination with one another. In this case, the controller may be configured to first determine the puff number of a given puff, in order to determine whether any power value restrictions should apply for said given puff. However, the controller may then be further configured to adjust or control the level of power that is supplied to the heating element during said given puff, based on the one or both of the flow rate and the pressure levels, which are measured throughout said given puff. More specifically, once the controller has determined a puff number of a given puff, the controller may limit the power supply options for said given puff to be defined by a specific look-up table associated with said given puff. The specific look-up table may comprising a set of power values and one or both of a set of flow rate parameters and a set of pressure level parameters, with each power value being associated in the look-up table with a corresponding flow rate parameter, pressure level parameter, or both. For other puff numbers, separate look-up tables could be used, each containing specific parameters provided for said puff numbers.

The present invention also relates to a method or methods which may be performed by the aerosol-generating devices described above. Therefore, according to a seventh aspect of the invention, there is provided a method for operating an aerosol-generating device, the method comprising: measuring one or both of a flow rate and a pressure level within an air flow passage of the aerosol-generating device; and controlling a supply of power to a heating element of the aerosol-generating device, wherein the amount of power supplied to the heating element is dependent on one or both of the flow rate and the pressure level measured by the sensor assembly.

According to an eighth aspect of the invention, there is provided a method for operating an aerosol-generating device, the method comprising: measuring one or both of a flow rate and a pressure level within an air flow passage of the aerosol-generating device; receiving at least one measured value for one or both of the flow rate and the pressure level; analysing the at least one measured value and determining when a user puffs on the aerosol-generating device; recording the time at which each puff starts and the time at which each puff ends; and controlling a supply of power to a heating element of the aerosol-generating device, wherein the amount of power supplied to the heating element for a given puff is dependent on the length of time between the start of said given puff and the end of the puff immediately preceding said given puff.

According to a ninth aspect of the invention, there is provided a method for operating an aerosol-generating device, the method comprising: measuring one or both of a flow rate and a pressure level within an air flow passage of the aerosol-generating device; receiving at least one measured value for one or both of the flow rate and the pressure level; analysing the at least one measured value and recording when a user puffs on the aerosol-generating device; assigning a puff number to each recorded puff; and controlling a supply of power to a heating element of the aerosol-generating device, wherein the amount of power supplied to the heating element for a given puff is dependent on the puff number of said given puff.

The present disclosure also incorporates preferred method steps for each of the seventh, eighth and ninth aspects of the invention based on the preferred functionality described above in respect of the controller and sensor assembly. By way of example, in preferred embodiments, the controller is further configured to use a look-up table for determining the amount of power to be supplied to the heating element. Consequently, the present disclosure also incorporates a preferred method step of using a look-up table for determining the amount of power to be supplied to the heating element.

Embodiments of the invention will now be described in detail, by way of example only, with reference to the accompanying drawings, in which:
Figure 1 shows a schematic view of an aerosol-generating system according to a first embodiment of the present invention;
Figure 2 is a block diagram of a controller for use in an aerosol-generating device according to a second embodiment of the present invention; and
Figures 3A-3C depict look-up tables for use by the controller of Figures 1 and 2.

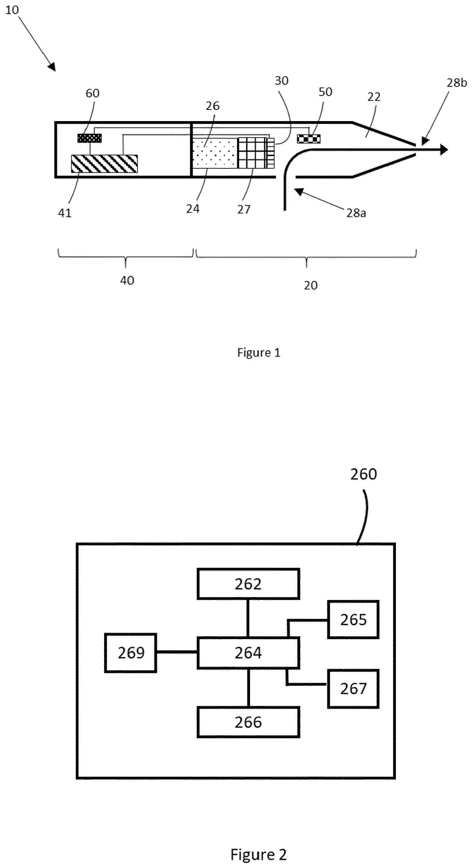

Figure 1 is a schematic view of an aerosol-generating system 10 comprising a cartridge 20, and an aerosol-generating device 40 that are coupled together. The device comprises a power supply 41, in the form of a battery, and controller 60 comprising control circuitry coupled to the power supply 41.

The cartridge assembly 20 comprises a housing 22, which forms a mouthpiece for the system. Within the housing there is a storage container 24 holding liquid aerosol-forming substrate 26. A capillary body 27 is disposed adjacent to an open end of the liquid storage container 24. An electric heater 30 is provided adjacent to an outer surface of the capillary body 27, so that the capillary body 27 can convey the liquid aerosol-forming substrate 26 from the liquid storage container 26 to the electric heater 30. The capillary body 27 and the electric heater 30 together form at least part of a heater assembly 31.

The electric heater 30 is also disposed adjacent to an airflow path in the cartridge 20. The airflow path is indicated by a curved arrow in Figure 1. The airflow path extends from an air inlet 28a to an air outlet 28b formed at a mouth end opening in the cartridge housing 22.

When the cartridge 20 is coupled to the aerosol-generating device 40 as shown in Figure 1, the electric heater 30 is electrically coupled to the power supply 41. The device 40 therefore functions to supply electrical power to the electric heater 30 in the cartridge 20 in order to vaporise the liquid aerosol-forming substrate. The vaporised aerosol-forming substrate is entrained in an airflow through the system, the airflow resulting from a user puffing on a mouth end of the cartridge 20. The vaporised aerosol-forming substrate cools in the airflow to form an aerosol before being drawn into a user's mouth.

A sensor assembly 50 comprising a pressure level sensor is disposed in the cartridge 20 adjacent to the airflow path. The sensor assembly 50 is coupled to the controller 60 and configured to send measurement data from the pressure level sensor to the controller 60. Although the sensor assembly 50 is shown in Figure 1 as being disposed within the cartridge 20, it will be appreciated that the sensor assembly 50 could alternatively be disposed within the device 20.

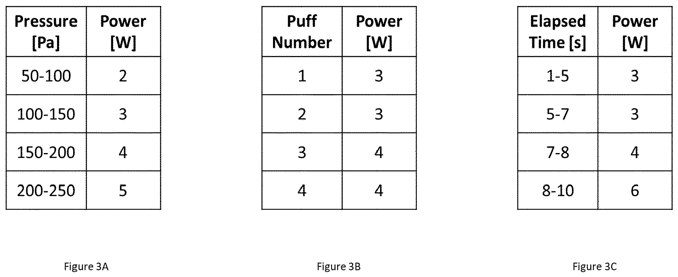

Figure 2 is a block diagram of a controller 260 in accordance with a second embodiment of the present invention. The controller includes a receiving module 262 configured to receive measurement data from the sensor assembly 50, a determining module 264 configured to determine an amount of power to be supplied to the heating element 30, and a power supplying module 266 configured to initiate the supply of power to the heating element 30. The determining module 264 is coupled to a clock 265, at least one look-up table 267, and a computer readable memory 269. Exemplary look-up tables 267 are shown in Figures 3A to 3C.

In a first exemplary implementation, the receiving module 262 of the controller 260 receives a measurement value from the sensor assembly 50 and relays this measurement value to the determining module 264. The determining module 264 uses the first look-up table 267A of Figure 3A to determine which pressure range in the first look-up table 267A encompasses the measurement value. The determining module then determines which power value in the first look-up table 267A corresponds to said pressure range. The power supply module 266 then initiates the supply of this power level to the heating element 30. For example, if the measurement value is 80 Pascals then the heating element is supplied with a power level of 2 Watts, whereas if the measurement value is 180 Pascals then the heating element is supplied with a power level of 4 Watts. In the first exemplary implementation, the measurement values may be sent from the sensor assembly 50 to the receiving module 262 of the controller 260 every 100 milliseconds. Each time a measurement value is received at the controller 260, a power level for the heating element is calculated, so that the amount of power supplied to the heating element can be continuously adjusted.

In a second exemplary implementation, the receiving module 262 of the controller 260 repeatedly receives measurement values from the sensor assembly 50 and relays these measurement values to the determining module 264. The determining module 264 analyses the received measurement values and determines when the measurement value rises above a first predefined threshold value stored in the computer readable memory 269, and rises below a second predefined threshold value stored in the computer readable memory 269. Each time this occurs, the determining module 264 uses the clock 265 to establish a time point for each rise and fall, and records this temporal information in the computer readable memory 269 as the time at which each puff on the aerosol-generating device starts and the time at which each puff on the aerosol-generating device ends. The determining module 264 then uses this recorded data to determine the length of time between puffs. The determining module 264 then compares this determined length of time with the elapsed time ranges in the second look-up table 262B of Figure 3B to establish a power level value, which should be supplied to the heating element 30 for the current puff. The power supply module 266 then initiates the supply of this power level to the heating element 30.

In a third exemplary implementation, the receiving module 262 of the controller 260 repeatedly receives measurement values from the sensor assembly 50 and relays these measurement values to the determining module 264. In a similar manner to the second implementation, the determining module analyses the measurement values to establish when a puff is made on the aerosol-generating device 10. However, in the third exemplary implementation, the determining module 264 further assigns a puff number to each puff that is made on the aerosol-generating device 10. In particular, in the third implementation, when the determining module 264 detects that the measurement value rises above the first predefined threshold value, the determining module 264 determines that a new puff is being made on the device. The determining module 264 then assigns a puff number of n + 1 to the current puff, where n is the puff number of the most recent puff on the device. The determining module 264 then compares the assigned puff number with the puff numbers contained in the third look-up table of Figure 3C and identifies the power level that corresponds to said puff number. The power supply module 266 then initiates the supply of this identified power level to the heating element 30 for use during the current puff.

As will be appreciated from the above discussion, the present disclosure also includes the following numbered clauses:
1. An aerosol-generating device comprising:
   an air inlet;
   an air outlet;
   an air flow passage extending between the air inlet and the air outlet;
   a heating element for heating an aerosol-forming substrate;
   a sensor assembly in communication with the air flow passage, the sensor assembly being configured to measure one or both of a flow rate and a pressure level within the air flow passage; and
   a controller coupled to the sensor assembly and configured control a supply of power to the heating element, wherein the amount of power supplied to the heating element is dependent on one or both of the flow rate and the pressure level measured by the sensor assembly.
2. An aerosol-generating device according to clause 1, wherein the controller is configured to:
   instigate the supply of a first amount of power to the heating element in response to the sensor assembly measuring one or both of a first level of flow rate and first pressure level within the air flow passage; and
   instigate the supply of a second amount of power to the heating element in response to the sensor assembly measuring one or both of a second level of flow rate and second pressure level within the air flow passage.
3. An aerosol-generating device according to clause 1 or clause 2, wherein the sensor assembly is configured to repeatedly measure one or both of the flow rate and the pressure level at set time intervals within the duration of a given puff, and
   wherein, if one or both of the flow rate and the pressure level change between any two adjacent measurement points, the controller is configured to adjust the amount of power being supplied to the heating element so that the amount of power is based on the most recently measured value for the one or both of the flow rate and the pressure level.
4. An aerosol-generating device according to any one of clauses 1 to 3, wherein the controller is further configured to use a look-up table for determining the amount of power to be supplied to the heating element, the look-up table comprising a set of power values and one or both of a set of flow rate parameters and a set of pressure level parameters, and wherein the look-up table associates each power value with a corresponding flow rate parameter, pressure level parameter, or both.
5. An aerosol-generating device comprising:
   an air inlet;
   an air outlet;
   an air flow passage extending between the air inlet and the air outlet;
   a heating element for heating an aerosol-forming substrate;
   a sensor assembly in communication with the air flow passage, the sensor assembly being configured to measure one or both of a flow rate and a pressure level within the air flow passage; and
   a controller coupled to the sensor assembly and configured to control a supply of power to the heating element, wherein the controller is further configured to receive data from the sensor assembly and determine when a user puffs on the aerosol-generating device and record the time at which each puff starts and the time at which each puff ends,
   and wherein the amount of power supplied to the heating element for a given puff is dependent on the length of time between the start of said given puff and the end of the puff immediately preceding said given puff, such that:
      the controller is configured to:
         instigate the supply of a first amount of power to the heating element for a first length of time between the start of a given puff and the end of the puff immediately preceding said given puff; and
         instigate the supply of a second amount of power to the heating element for a second length of time between the start of a given puff and the end of the puff immediately preceding said given puff; and
   wherein the first length of time is greater than the second length of time, and the first amount of power is greater than the second amount of power.
6. An aerosol-generating device according to clause 5, wherein controller is further configured to adjust the amount of power supplied for said given puff based on historic measurements for one or more puffs preceding said given puff.
7. An aerosol-generating device according to clause 5 or clause 6, wherein the controller is further configured to determine whether a data value sent to the controller from the sensor assembly exceeds a threshold value, and if the data value exceeds the threshold value, determine that said data value indicates the start of a puff.
8. An aerosol-generating device according to any one of clauses 5 to 7, wherein the controller is further configured to determine whether a data value sent to the controller from the sensor assembly is below a threshold value, and if the data value is below the threshold value, determine that said data value indicates the end of a puff.
9. An aerosol-generating device according to any one of clauses 5 to 8, wherein the controller is further configured to use a look-up table for determining the amount of power to be supplied to the heating element, the look-up table comprising a set of power values and a set of time ranges, and wherein the look-up table associates each power value with a corresponding time range.
10. An aerosol-generating device comprising:
   an air inlet;
   an air outlet;
   an air flow passage extending between the air inlet and the air outlet;
   a heating element for heating an aerosol-forming substrate;
   a sensor assembly in communication with the air flow passage, the sensor assembly being configured to measure one or both of a flow rate and a pressure level within the air flow passage; and
   a controller coupled to the sensor assembly and configured to control a supply of power to the heating element, wherein the controller is further configured to receive data from the sensor assembly and record when a user puffs on the aerosol-generating device and assign a puff number to each puff which is recorded by the controller,
   and wherein the amount of power supplied to the heating element for a given puff is dependent on the puff number of said given puff.
11. An aerosol-generating device according to clause 10, wherein the controller is further configured such that no power is supplied to the heating element when a given puff is occurring, if the puff number assigned to said given puff exceeds a threshold value.
12. An aerosol-generating device according to clause 10 or clause 11, wherein the controller is further configured to use a look-up table for determining the amount of power to be supplied to the heating element for a given puff number, the look-up table comprising a set of power values and a set of puff numbers, and wherein each power value of the look-up table is different from the other power values of the look-up table, and wherein the look-up table associates each power value with one puff number in the set of puff numbers.
13. An aerosol-generating device according to any one of clauses 10 to 12, wherein the controller is configured to supply a first level of power for a first puff number and a second level of power for a second puff number, the first level of power being greater than the second level of power, and the first puff number being greater than the second puff number.
14. An aerosol-generating device according to any one of clauses 10 to 13, further comprising a button for resetting the puff number to zero.
15. An aerosol-generating device according to any one of clauses 10 to 14, wherein the device is configured such that the puff number resets to zero after a predefined amount of time has passed since a certain numbered puff occurred.
16. An aerosol-generating device according to any one of clauses 10 to 15, wherein the sensor assembly comprises at least one sensor disposed within the air flow passage.
17. An aerosol-generating device according to clause 15, wherein the sensor assembly comprises a first pressure level sensor and a second pressure level sensor spaced along the air flow passage.
19. An aerosol-generating device according to any one of clauses 4 to 16, wherein the heating element comprises a mesh.
20. An aerosol-generating systems comprising an aerosol-generating device according to any one of clauses 4 to 17, and at least one an aerosol-generating article or cartridge for use with the aerosol-generating device.

## Claims

1. An aerosol-generating device comprising:
an air inlet;
an air outlet;
an air flow passage extending between the air inlet and the air outlet;
a heating element for heating an aerosol-forming substrate;
a sensor assembly in communication with the air flow passage, the sensor assembly being configured to measure one or both of a flow rate and a pressure level within the air flow passage; and
a controller coupled to the sensor assembly and configured to control a supply of power to the heating element, wherein the controller is further configured to receive data from the sensor assembly and record when a user puffs on the aerosol-generating device and assign a puff number to each puff which is recorded by the controller,
wherein the amount of power supplied to the heating element for a given puff is dependent on the puff number of said given puff, and
wherein the device is configured such that the puff number resets to zero after a predefined amount of time has passed since a certain numbered puff occurred.

2. An aerosol-generating device according to claim 1, wherein the controller is further configured such that no power is supplied to the heating element when a given puff is occurring, if the puff number assigned to said given puff exceeds a threshold value.

3. An aerosol-generating device according to claim 1 or claim 2, wherein the controller is further configured to use a look-up table for determining the amount of power to be supplied to the heating element for a given puff number, the look-up table comprising a set of power values and a set of puff numbers, and wherein each power value of the look-up table is different from the other power values of the look-up table, and wherein the look-up table associates each power value with one puff number in the set of puff numbers.

4. An aerosol-generating device according to any one of claims 1 to 3, wherein the controller is configured to supply a first level of power for a first puff number and a second level of power for a second puff number, the first level of power being greater than the second level of power, and the first puff number being greater than the second puff number.

5. An aerosol-generating device according to any one of claims 1 to 4, further comprising a button for resetting the puff number to zero.

6. An aerosol-generating device according to any one of the preceding claims, wherein the sensor assembly comprises at least one sensor disposed within the air flow passage.

7. An aerosol-generating device according to claim 6, wherein the sensor assembly comprises a first pressure level sensor and a second pressure level sensor spaced along the air flow passage.

8. An aerosol-generating device according to any one of the preceding claims, wherein the heating element comprises a mesh.

9. An aerosol-generating systems comprising an aerosol-generating device according to any one of the preceding claims, and at least one an aerosol-generating article or cartridge for use with the aerosol-generating device.
